# EUROPEAN PATENT APPLICATION

(11) **EP 2 409 867 A1**
(43) Date of publication of application: **25.01.2012**
(21) Application number: 11174148.4
(22) Date of filing: 15.07.2011
(51) Int. Cl.: B60J 7/043

(54) **Sunroof**

(30) Priority: 20.07.2010 IT TO20100624
(71) Applicant: Webasto S.p.A., 10078 Venaria (IT)
(72) Inventor: Ferragatta, Luca, 10090 RIVOLI (IT)
(74) Representative: Di Gennaro, Sergio

(57) **Abstract**

Sunroof adapted to cover openings (A) obtained in a structure (S), comprising a roof structure (1) and at least one or more covering portions (2), which are adapted to coat at least one portion of said opening (A); at least one cam mechanism, at least one lever mechanism and at least one actuator (3), co-operating with one another, which are adapted to move at least one covering portion (2), wherein it can perform at least one overturning movement of said at least one covering portion, so as to uncover a portion of the opening (A) equal to the area of said at least one covering portion (2).

## Description

The present invention is relative to a sunroof, which is adapted to cover openings obtained in specific structures, e.g. openings obtained on the roof of vehicles, such as, for example, watercrafts, ships, cars, campers, caravans, said sunroof assuming different positions according to the needs of the user.

Said sunroof can change its position to allow or not both the recirculation of air and the view through said opening. Sunroofs are known, which, for example, are applied to the roofs of cars and are moved by one or more actuators, as a function of the complexity of the movements. Normally, said sunroof is hinged along one of its sides, about which it can turn so as to assume a so-called tilted or inclined position, using one or more direct actuators along an axis, normally the vertical axis.

There are also sunroofs which do not affect the aerodynamics of the vehicle, thus allowing the user to keep said sunroof completely open also during the ride of the vehicle itself. Normally, the movement of the sunroof aimed at obtaining different positions, besides the above-mentioned tilted position, requires the presence of further actuators, which normally act along different axes with respect to the axis along which the actuator aimed at reaching the tilted position acts.

The use of actuators which act along different directions leads to an increase in costs, since the actuators, which normally are hydraulic pistons or electric motors, play a non-negligible role in the total calculation of the manufacturing costs of a sunroof.

Furthermore, normally, the safety mechanisms for locking, in a safe and reliable way, the sunroof in predetermined positions are activated by means of actuators which are independent of the actuators used for the movement of the sunroof.

Normally, in those sunroofs which allow the user to uncover, for example by means of a sliding movement, the entire opening covered by said sunroof, there is provided an area of encumbrance, which is comprised in the structure where the opening is obtained and is adapted to house the covering portions of the sunroof when said opening is totally uncovered.

Said area of encumbrance, which is occupied by the covering portions when the opening is totally uncovered, is usually equal to the area of the opening itself.

Normally, when manufacturing an opening in a structure, it is necessary to bear in mind that the area of the surface of the opening cannot exceed half the entire area of the structure in which said opening has to be obtained, since an area of encumbrance equal to the area of the opening itself is necessary.

By way of example, if the structure in which the opening has to be obtained has a surface of 4m², said surface of the structure has to be divided into two halves, one for the opening and one for the area of encumbrance housing the covering portions when the opening is totally uncovered. The object of present invention is to solve the above-mentioned problems by providing a sunroof which is moved, keeping at the same time an optimal aerodynamic profile, by means of one or more actuators which all act along on single direction, thus allowing the sunroof to assume a plurality of positions, all of them aerodynamically optimal, as a function of the needs of the user. Furthermore, the movements performed by said sunroof allow a reduction of the space occupied by the covering portions in the structure, when the opening is totally uncovered. Therefore, the present solution allows, given an equal surface of the available structure, an enlargement of the area of the opening with respect to the prior art, since the area of encumbrance occupied by the covering portions when the opening is totally uncovered is reduced. Furthermore, the same actuators used for moving the sunroof are also used for activating and deactivating the safety mechanisms.

One aspect of the present invention is relative to a sunroof having the features set forth in appended claim 1. Further accessory features are set forth in the appended dependent claims.

The additional features and advantages of said sunroof will be best understood by the following detailed description of a specific embodiment with reference to the accompanying drawings, which specifically illustrate what follows:
- figure 1 illustrates the sunroof according to the present invention in the position of sunroof closed;
- figure 2 illustrates the sunroof according to figure 1 passed to a tilted or inclined position, according to the present invention;
- figure 3 illustrates a transition position of the sunroof according to the present invention between a tilted position and an intermediate position;
- figure 4 illustrates the sunroof in an intermediate position, where the opening is partially uncovered, thus enabling direct view between the two environments;
- figure 5 illustrates the sunroof according to the present invention in the final position final, where the sunroof frees the opening leaving the entire opening "A" uncovered;
- figures 6A and 6B respectively illustrate what follows; figure 6A illustrates the sunroof of the previous figures applied to a surface where the opening to be covered has been obtained, figure 6B illustrates a top view of the sunroof with indication of the dimensions of the sunroof itself;

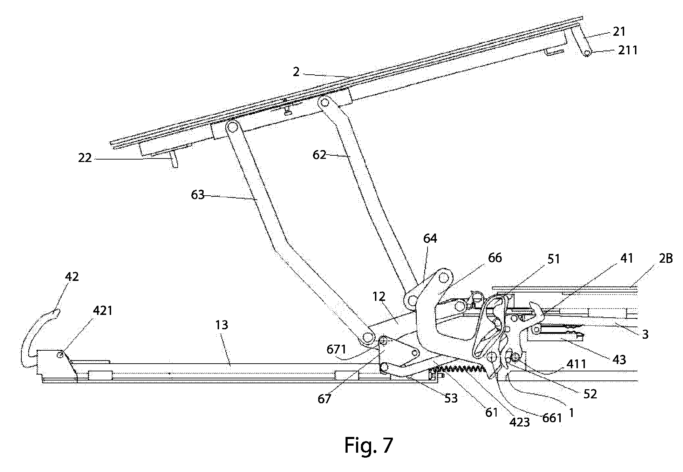

- figure 7 illustrates, in detail, the lever system and the cam system according to the present invention.

With reference to the above-mentioned figures, the sunroof according to the present invention is adapted to cover openings "A" obtained in a structure "S", and comprises a roof structure 1 and at least one covering portion 2, which are adapted to coat at least one portion of said opening "A".

Said one or more covering portions 2 can assume a plurality of positions "P", for example to allow the recirculation of air or the complete view beyond said opening "A".

Said sunroof comprises, furthermore, at least one cam mechanism, at least one lever mechanism, and at least one actuator 3, co-operating with one another, which are adapted to move at least one covering portion 2 in any position "P". Said sunroof performs at least one overturning/sliding movement of at least two covering portions 2, so as to uncover a portion of opening "A" equal to the area of said at least one covering portion 2.

Said overturning/sliding movement allows at least one first covering portion 2A to be arranged above at least one second covering portion 2B. Furthermore, said at least one covering portion 2 performs a sliding movement along at least one slide guide 14, subsequent to said overturning/sliding movement, so as to uncover a portion of opening "A", which is larger than what can be obtained by means of the simple overturning/sliding movement, and equal to the area of covering portions 2 involved in said sliding movement, engaging an area of encumbrance "S'", which is comprised in the surface of the structure "S" and presents reduced dimensions with respect to the area of the opening "A", when said opening "A" is totally uncovered, thus reducing the encumbrance of the sunroof on the surface of structure "S".

The movement of the above-mentioned covering portions 2A and 2B allows the uncovering of entire opening "A", engaging an area of encumbrance "S'" presenting dimensions which are approximately equal to those of a single covering portion 2.

The present invention allows a reduction of the area of encumbrance "S'", which is comprised in the surface of structure "S" and is then occupied by covering portions 2, when opening "A" is totally uncovered. Said sliding movement is preferably performed in the actuation direction of said at least one actuator 3.

Furthermore, said at least one covering portion 2 performs a tilting or inclination movement, turning about a transverse axis "Y", prior to the overturning movement. Said at least one actuator 3 performs its function along one single predetermined direction, for example along a longitudinal axis "X", passing from one position to another preferably in a sequential way.

The different positions are a combination of one or more movements, such as rotation, translation, lifting and inclination with respect to one or more axes.

Portions 2 can be made, for example, of plastic or glass materials and they can be both transparent and opaque, so as to screen sun light, as a function of the application in which said sunroof is used. The components constituting both the cam mechanism and the lever mechanism are preferably made of metal materials.

Different covering portions 2 are kept in the different positions by means of at least one retention mechanism, which is activated and deactivated by the co-operation of actuators 3 with the cam mechanism and the lever mechanism. Said retention mechanism comprises at least one retention device 41, which locks at least one covering portion 2 in a predetermined position, at least one safety device 43, which keeps at least one covering portion 2 locked, in a secure way, in one or more predetermined positions, and at least one constraint element 42, which is adapted to hinge and lock at least one covering portion 2 to at least one axis, for example about a transverse axis "Y", which is perpendicular to longitudinal axis "X".

Each covering portion 2 comprises at least one locking element 21, which is adapted to secure covering portion 2, by means of the retention mechanism, to roof structure 1 in predetermined positions.

Locking elements 21 according to the present invention are used to secure portion 2 in different positions using the above-mentioned parts of the retention mechanisms, as a function of the position is which te covering portion 2 is. Furthermore, at least one covering portion 2 comprises at least one engagement portion 22, preferably slot-shaped, in which constraint element 42 of the retention mechanism can fit, so as to perform its function of constraint, hinging at least one covering portion 2.

Roof structure 1 comprises, furthermore, at least one guide structure comprising, in turn, at least one above-mentioned slide guide 14, which is adapted for the actual sliding of the sunroof along a predetermined axis, and at least one closing slide 13, which is adapted to move constraint element 42.

Actuator 3 is preferably a hydraulic cylinder which can be implemented both in mono-cylinder type and in telescopic type based on the field in which said sunroof is used.

In an alternative embodiment, said actuator 3 can be implemented, for example, by means of an electric motor, which can act both on a rack and on a chain, so as to co-operate with the cam mechanism and the lever mechanism, as a function of its field of application.

In further embodiments, actuator 3 can be obtained by means of ropes and Bauden cables, which are normally used in watercrafts, e.g. sailboats.

The sunroof according to the embodiment illustrated comprises two covering portions 2A and 2B side by side, which preferably present a rectangular shape and are preferably moved by two actuators 3 and 3', which are parallel to each other and are arranged along longitudinal axis "X", which is parallel to two sides of portions 2.

The present embodiment is manufactured with two actuators, so as to reduce both the stress required for the movement and the problems caused by possible bindings in the movements of the structure, typical of asymmetric systems, thus making said sunroof stronger and more reliable.

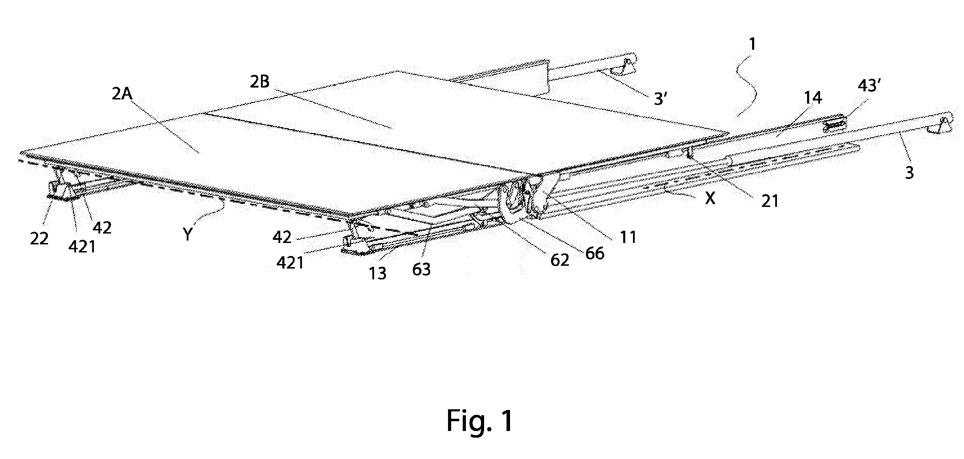

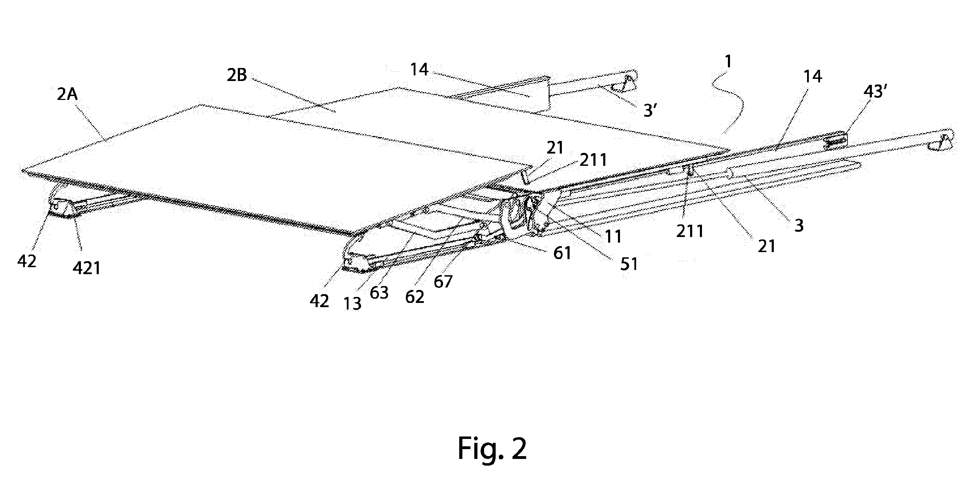

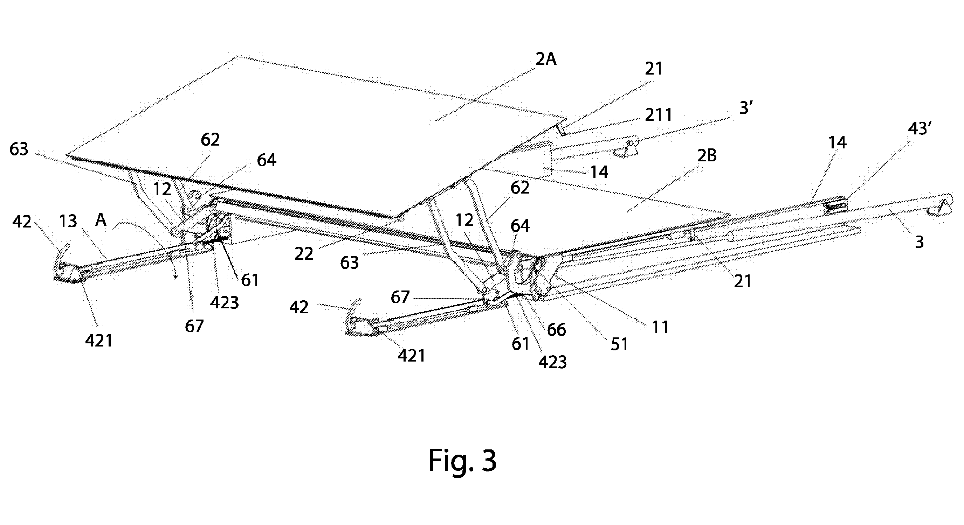

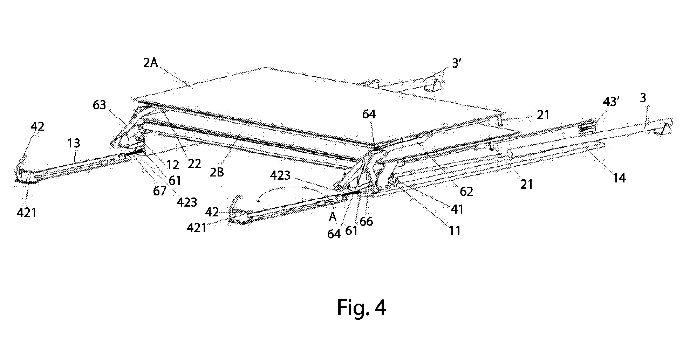

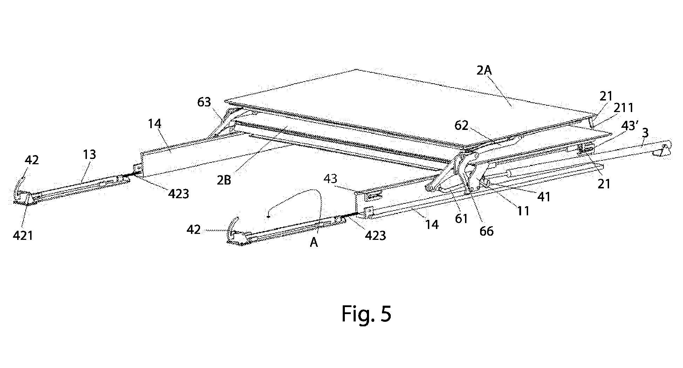

In an alternative embodiment it is also possible to manufacture the present invention with one singe actuator 3, which needs to be properly dimensioned and positioned. In the present embodiment, for example, said sunroof assumes five different positions:
- P1 position of roof closed, in which the roof completely covers opening "A" (figure 1);
- P2 tilted or inclined position, in which the sunroof is inclined at an angle ranging from 2° to 15°, thus allowing the recirculation of air between the two environments put into communication by opening "A" and hindering the passage of water in case of rain (figure 2);
- P3 transition position, which is a transition position between the tilted position and an intermediate position (figure 3);
- P4 intermediate position, in which opening "A" is partially uncovered, thus enabling direct view between the two environments (figure 4);
- P5 final position, in which the roof frees opening "A" leaving entire opening "A" uncovered (figure 5).

This positions are preferably assumed in a sequential way.

In order to assume the above-mentioned tilted position, at least one covering portion 2, for example portion 2A, is hinged so as to turn, preferably at an angle ranging from 2° to 15°, about at least one axis, for example parallel to a side of covering portion 2, preferably about the transverse axis "Y", which is perpendicular to longitudinal axis "X", along which actuator 3 acts.

Thanks to the cam mechanism and the lever mechanism, besides the tilted position, the covering portion, more precisely portion 2A, can perform different movements, for example portion 2A is lifted and translated with respect to portion 2B, overlapping the latter.

In an alternative embodiment, which is not illustrated, portion 2A, by means of the cam mechanism, the lever mechanism and actuator 3, slides on portion 2B overlapping it, or vice versa, thus obtaining the same result which is obtained with an overturning movement of portion 2A on portion 2B.

Furthermore, both portions 2 longitudinally slide along at least one axis, preferably along longitudinal axis "X", thanks to the guide structure, more precisely by means of slide guide 14. In the present embodiment, in the above-mentioned position of closed roof, the two covering portions 2A and 2B are arranged on the same plane, which preferably corresponds to the external surface of structure "S", in which said opening "A" is obtained.

Said structure "S" can be, for example, the roof of boats, cars, campers, caravans or any other civil or military means of transport.

Said sunroof, besides the above-mentioned applications, can also be implemented in buildings for moving skylights or windows which are located on the ceiling of said buildings. Retention device 41, which is preferably hook-shaped, locks, for example, portion 2A holding locking element 21 comprised in said portions 2. Said locking element 21 preferably has an oblong shape comprising at least one protuberance 211, which is arranged at one end of said element 21.

Said protuberance 211 has such a shape that allows it to be easily hooked and held by retention device 41. Retention device 41 locks covering portion 2A, in a safe way, in position "P1" by means of locking element 21, as mentioned above.

In the present embodiment, for each covering portion (2A and 2B), there are two locking elements 21, one for each side of portions 2 parallel to longitudinal axis "X", to which as many retention devices 41 are associated.

Said retention device 41 is fixed by means of a pin 411 to roof structure 1 and is guided in the rotation about the axis of said pin 411 by means of a closing cam 52, which guides and guarantees both the opening and the closing of said device 41.

The axis of pin 411, about which retention device 41 turns, is preferably perpendicular to the direction of movement of actuator 3.

Safety device 43 is preferably obtained by means of at least one fork, which locks locking element 21 comprised in at least one covering portion 2, in particular portion 2B, when said portion is in a predetermined position. In the following embodiment there preferably are two safety systems 43, so as to fix portion 2B in all above-mentioned positions "P".

More in detail, above-mentioned protuberance 211 of element 21 of portion 2B is inserted between the two arms of the fork of safety device 43. Said arms lock in a safe way said element 21, when the latter exceeds a given penetration depth inside the forks.

Said safety devices 43 are fixed to the guide structure, which allows the different mechanisms present in the sunroof to slide along a longitudinal axis, for example along longitudinal axis "X". More precisely, in the embodiment illustrated in the figures, covering portion 2B is locked by safety device 43, when the sunroof is in positions from "P1" to "P4". When the sunroof reaches position "P5", covering portion 2B is locked by similar locking devices 43', as shown in the figures.

Constraint element 42 preferably presents a curved shape, for example the shape of a hook, so that it can fulfill the function of hinge, thus allowing the rotation of at least one portion 2, more precisely portion 2A, about at least one axis, for example about transverse axis "Y".

Furthermore, said constraint element 42 performs a locking function of the above-mentioned portion 2A, when the latter is in predetermined positions, e.g. position "P1" and "P2". In the present embodiment, portion 2A can turn about transverse axis "Y", when constraint element 42 is inserted inside engagement portion 22.

Each covering portion 2 preferably comprises two engagement portions 22, which are arranged, for example, at the ends of a side of said portion 2A, corresponded by as many constraint elements 42, so as to keep the edge of the covering portion in contact with the edge of structure "S", when said sunroof is in positions "P1" and "P2".

Each constraint element 42 is fixed to roof structure 1 by means of a pin 421. Constraint elements 42 are connected to closing slide 13, which is adapted to move elements 42 allowing their rotation about pins 421.

Said rotation of elements 42 allows engagement portions 22 to be released, when, for example, covering portion 2A passes from position "P2" to position "P3".

When the sunroof is in position "P1", furthermore, elements 42 perform a function of safety lock. Each constraint element 42 is moved by closing slide 13, which is connected to at least one elastic means 423, which is adapted to keep it in position co-operating with a cam 53.

Said elastic means 423, normally a helical spring, is adapted to keep closing slide 13 in position, as mentioned above, when said sunroof changes its position; furthermore, said means 423 allows closing slide 13 to move element 42 by means of cam 53.

In the present embodiment, portion 2A is locked when it is in position "P1" and it is free to turn about transverse axis "Y", so ad to pass from position "P1" to position "P2" and vice versa. Constraint element 42, which is moved by closing slide 13, constrains covering portion 2 as a function of the position in which said portion is. In an alternative embodiment, it is possible to implement constraint elements 42 also for covering portion 2B, thus allowing also portion 2B to assume the tilted position. Actuator 3, which is obtained with a hydraulic piston, is hinged at an end and the other end is connected both to the cam mechanism and to the lever mechanism. The constraint arranged at one of its ends allows actuator 3 to vary the angle with respect to the plane defined by structure "S", so as to co-operate in a constructive way with the lever mechanism and the cam mechanism.

A non-limiting embodiment of the cam and lever mechanisms will be described hereinafter, the cam and lever mechanisms being comprised in one single side of the sunroof according to the present invention; the mechanisms comprised in the opposite sides are identical and specular.

Actuator 3, when the sunroof is in position "P1" of closed roof, is in its point of maximum extension.

The transition from position "P1" to position "P5", through the other positions, takes place through contraction of actuator 3.

Actuator 3 is directly connected to the body of retention device 41, which comprises closing cam 52, which preferably has the shape of a circle arc.

By means of a first cam 51, retention device 41 is connected to a first rotation element 66.

Said first cam 51 is preferably S-shaped, so as to be able to transmit the correct movement from actuator 3, and in particular from retention element 41, to first rotation element 66 and to all the levers and cams fixed thereto. Said first rotation element 66 is preferably substantially U-shaped.

First cam 51 is connected in the arm close to actuator 3. Said first element 66 is fixed to a flange 11 by means of a pin 661, which allows the rotation of th first element 66. Said flange 11, comprised in roof structure 1, preferably presents the shape of a parallelogram.

The axis of the pin about which first element 66 can rotate is preferably external to the main body of said element in correspondence to a connection protuberance, which is comprised in said element 66.

A rotation arm 61 is furthermore pivoted to retention device 41, said rotation arm 61 activating, by means of lever 67, closing slide 13 and unlocking hook 42 in the sequential passage from position "P1" to the other following positions "P".

Said arm 61 preferably presents an oblong shape, in which, at the end opposite to device 41, it is curved with a suited curvature angle.

A first lever 64 is pivoted to the second arm of rotation element 66, at its end, so that first lever 64 can rotate about said pin.

A first lifting arm 62 is pivoted to said first lever 64, at the other end, said first lifting arm 62 being fixed, by means of pins, to portion 2A at one end, while the other end of said arm 62 is pivoted to roof structure 1, preferably to a connection portion 12.

The position of the pin on the first arm 62, where first lever 64 is fixed, is such that first lever 64 can act on first lifting arm 62, thus allowing it to move with respect to the above-mentioned constraints. Said lifting arm 62 has an oblong shape with suited bendings, which is adapted to allow the movement of portions 2.

At the end opposite to rotation arm 61, where the curvature is present, there is fixed, by means of a pin so as to rotate, a second rotation element 67, preferably with a triangular shape.

A second end of the second rotation element 67 is fixed, by means of a pin 671, to connection portion 12, so that rotation element 67 can turn about the axis of said pin 671.

At least one second cam 53 is fixed to said rotation element, said second cam 53 acting on closing slide 13, thus allowing the movement of constraint element 42. Furthermore, there is also a second lifting arm 63, which, like first arm 62, is pivoted both to covering portion 2A and to connection portion 12, so as to be able to move with respect to the constraints. Said second arm 63 has an oblong shape with suited bendings, as well, so as to allow a correct movement of portions 2.

In the present embodiment, said second arm 63 does not perform a function of direct movement transmission, but it rather assists first arm 62 in the movement of covering portions 2.

Said two lifting arms (62 and 63) are substantially parallel to each other in position "P1", in position "P2" and in position "P3".

In the transition from position "P1" to position "P2", the contraction of actuator 3 disengages retention device 41, thus freeing locking element 21 of portion 2A.

The rotation of the retention device about pin 411, guided by closing cam 52, moves, by means of first cam 51, first rotation element 66, which gets closer to actuator 3 rotating about pin 661, preferably in a clockwise direction.

The rotation of first rotation element 66 allows the movement of portion 2A, which is now released from device 41.

Furthermore, this retreat movement of actuator 3 allows constraint element 42, by means of closing slide 13 on which second cam 53 acts, to perform a partial rotation, since cam 53, in the rotation of the second rotation element 67, reduces its action, thus allowing the partial rotation of said constraint element about pin 421.

The movement of retention device 41 allows rotation arm 61 to retreat, thus making second rotation element 67 rotate about the axis of pin 671, preferably in an anticlockwise direction.

The rotation of first rotation element 66 leads to the movement of first lever 64, which lifts first arm 63, thus causing the lifting of covering portion 2A, also thanks to the support given by second lifting arm 63.

Covering portion 2A in position "P2", according to the present embodiment, is still hinged by constraint element 42, which is not completely disengaged yet.

In the transition from position "P2" to position "P3", the contraction of actuator 3 allows the clockwise rotation both of retention device 42, about the axis of pin 411, and of rotation element 66, about pin 661, to continue, thanks to first cam 51. The rotation of retention device 41 causes the rotation of second rotation element 67 about the axis of pin 67.

Locking cam 52 is adapted both to lock the sunroof and to always transmit the force generated by actuator 3 to the lever and cam mechanism, so that the force can be used to enable the rotation from position "P2" to position "P4" and to avoid a sliding of the structure before due time.

By performing this movement, actuator 3 allows a higher lifting of lifting arms (62 and 63), which lift covering portion 2A.

The lifting of said portion 2A, together with the continuous rotation about pin 421 of constraint element 42 up to its limit stop, allows engagement portion 22 to be freed of retention portion 42, thus unlocking and releasing covering portion 2A.

As mentioned above, retention portion 42 performs a continuous movement from a locking position, assumed in position "P1", up to its disengagement limit stop, reached in position "P3", thanks to closing slide 13 and elastic means 423.

Said elastic means 423 is contrasted by second cam 53, which is comprised in second rotation element 67 and tends to bring retention portion 42 in the locking position.

Said position "P3" is not an operating position, but simply an intermediate position, which is used as transition from position "P2" to position "P4"; said portion "P3" is described only to help the reader understand the movement of the sunroof according to the present invention.

In the transition from position "P3" to position "P4", the rotation of retention device 41 is completed and retention device 41 reaches its limit stop defined by first cam 51. In the transition from one position to the other, the movement of device 41 rotates the rotation element 66 thanks to cam 51, as can be seen in figure 4.

The above-mentioned movement causes the rotation of second rotation element 67, which has definitively freed closing slide 13 of the action of cam 53, thus taking constraint element 42 to the limit stop in the rotation about pin 421. Said rotation of first rotation element 66 causes first arm 62 and, as a consequence, also second arm 63 to assume a very similar position, as can be seen in figure 4.

In said position "P4", both the cam mechanism and the lever mechanism reach a stop point, in which actuator 3, even though it has further retreated, is inhibited from causing movements both of the cams and of the levers. In the transition from position "P4" to position "P5", as mentioned above, the further shortening of the extension of actuator 3 causes the sliding of covering portions 2A and 2B, which are overlapping as shown in figure 4, along slide guide 14 until they reach a limit sop, i.e. until at least locking element 21 of portion 2B is locked by safety device 43' which is arranged in proximity to the limit stop of actuator 3. In this transition, the action of actuator 3 is exploited to perform a translation movement along slide guide 14, since both the lever mechanism and the cam mechanism are in an impasse condition, more in particular cam 52 is deactivated and the force of the actuator is used for the sliding instead of for the actuation of the levers and of the cams.

In the inverse transition, i.e. from position "P5" to position "P4", the position of the mechanisms (cam and lever mechanisms) remains unchanged despite the elongation of actuator 3, since first rotation element 66 comprises a locking portion, which is adapted to prevent the levers and the cams from being activated before the sunroof correctly reaches position "P4". This locking portion (not illustrated) prevents the cam and lever mechanisms from being activated before position "P4" is reached, due to obstacles such as, for example, bindings of the structure, thus avoiding damages to the structure, which can be cause by a premature activation.

The elongation of actuator 3 causes the disengagement of locking element 21 from safety device 43', thus allowing covering portions 2A and 2B to slide along slide guide 14. When an elongation length of actuator 3 is reached, which is higher than the length assumed by said actuator 3 in position "P4", retention device 41 is guided by closing cam 52 and rotates about pin 411, preferably in an anticlockwise direction, opposite to what described before. This movement of retention device 41 activates first cam 51, which allows first rotation element 66 to rotate about the axis of pin 661, in an opposite direction with respect to what described before, lifting again covering portion 2A from portion 2B thanks to lifting arms (62 and 63).

In the inverse transition from one position to another, i.e. in the transition from position "P4" to other positions "P3", "P2" and "P1", the cam mechanism and the lever mechanism perform operations which are opposite to the ones described before, the direction of rotation of rotation elements (66 and 67) is inverse with respect to the one described before.

This inverse development allows covering portion 2 to go back to position "P1" of closed roof.

This locking mechanism comprises a plurality of elastic elements, e.g. springs, which allow covering portion 2, in particular portion 2A and 2B, to be locked in given positions, preferably positions "P2", "P4" and "P5".

This locking mechanism allows said portions 2 to be locked also for long amounts of time, thus being able to keep said chosen position even in case actuator 3 cannot perform its tasks, for example, due to faults or unloading of the hydraulic circuit for piston actuators.

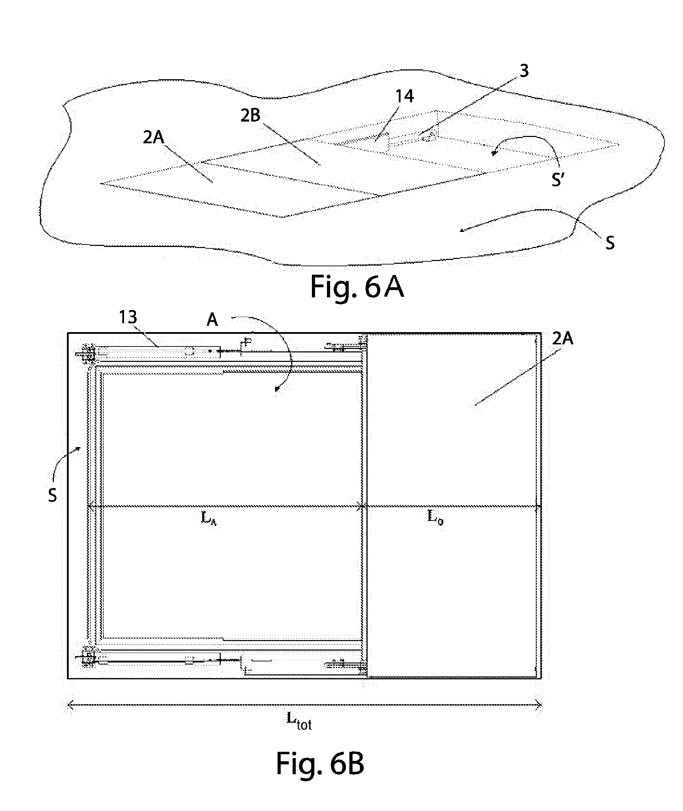

In the embodiment illustrated in figure 6A there are two covering portions 2A and 2B. In the transition from one position to another, as mentioned above, opening "A" is uncovered of a quantity equal to at least 1/2 of opening "A", when the sunroof is in position P4, subsequent to the overturning of portion 2A on portion 2B.

On the other hand, opening "A" is almost entirely uncovered when the sunroof is in position P5, subsequent to sliding movement.

This movement causes portions 2A and 2B, overlapping each other, to occupy an area of encumbrance "S'", whose dimensions are equal to the dimensions of a single covering portion 2.

More in particular, in the embodiment illustrated in figure 6B, given an available surface of structure "S" with one side with length Lₜₒₜ, it is possible to obtain an opening "A" with one side with length L_{A}, which is approximately equal to 2/3 of the length Lₜₒₜ, and an area of encumbrance "S'" with one side with length Lₒ, which is approximately equal to 1/3 of the length Lₜₒₜ.

Said side with length Lₒ approximately corresponds, furthermore, to 1/2 of the length L_{A}.

This solution allows a reduction of the area of encumbrance "S'" occupied by covering portions 2, thus allowing, given same surface "S", the achievement of an opening "A" with a larger area, since a smaller area of encumbrance "S"' is necessary with respect to the sunroofs of the known type, when opening "A" is totally uncovered. In alternative embodiments of said sunroof, it is possible to incline covering portions 2 in the tilted position by constraining them in the rotation about one or more different axes, for example along an axis which is parallel to action axis "X" of actuators 3.

It is therefore possible, introducing appropriate changes of the cam mechanism and of the lever mechanism, to implement any movement of covering portion 2, despite the fact that actuator 3 acts along one single predetermined direction.

It is furthermore possible, in a further embodiment, to implement covering portions 2 in such a way that the different portions can move in an independent but sequential way, maintaining at the same time the features of the present invention.

In an alternative embodiment, actuator 3 fulfills its function in an opposite way, i.e. it exploits an elongation to pass from position "P1" to position "P5" and a contraction for the inverse path from position "P5" to position "P1".

### NUMERICAL REFERENCES

Roof structure 1
Flange 11
Connection portion 12
Closing slide 13
Slide guide 14
Covering portion 2
Locking element 21
Protuberance 211 Engagement portion 22 Actuator 3
Retention device 41
Pin 411
Constraint element 42
Pin 421
Elastic means 423
Safety device 43
First cam 51
Second cam 52
Rotation arm 61
First lifting arm 62
Second lifting arm 63 First lever 64
First rotation element 66
Pin 661
Second rotation element 67 Pin 671
Opening A
Structure S
Area of encumbrance S'
Longitudinal axis X
Transverse axis Y
Position P

## Claims

1. Sunroof, for covering openings (A) made in a structure (S), comprising:
a roof structure (1) and at least one or more covering portions (2), for coating at least one portion of said opening (A);
at least one cam mechanism, at least one lever mechanism,
and at least one actuator (3), co-operating with one another, which are for moving at least one covering portion (2),
**characterized in that** it can perform at least one movement of overturning of said at least one covering portion (2) in such a way as to uncover a portion of the opening (A) equal to the area of said at least one covering portion (2).

2. Sunroof according to claim 1, wherein at least two covering portions (2) perform a movement such that at least one first covering portion (2A) sets itself on top of at least one second covering portion (2B) via a movement of sliding.

3. Sunroof according to any one of the preceding claims, wherein said at least one covering portion (2) performs a movement of sliding, subsequent to said movement of overturning, along at least one slide guide (14) in such a way as to uncover a portion of the opening (A), greater than what can be obtained by just the movement of overturning, equal to at least the area of the covering portions (2) involved in said movement, and engaging an area of encumbrance (S'), comprised in the surface of the structure (S), of reduced dimensions with respect to the area of the opening (A), when said opening (A) is totally uncovered.

4. Sunroof according to claim 3, wherein the uncovering of the entire opening (A) engages an area of encumbrance (S') of dimensions approximately equal to that of a single covering portion (2).

5. Sunroof according to any one of the preceding claims, wherein said at least one covering portion (2) performs a movement of tilting by turning about at least one transverse axis (Y), prior to the movement of overturning.

6. Sunroof according to any one of the preceding claims, wherein said at least one actuator (3) moves substantially in just one preset direction.

7. Sunroof according to any one of the preceding claims, wherein said at least one covering portion assumes in a sequential way the following positions:
• a position of roof closed (P1), where the roof covers the opening (A) completely;
• a tilted position (P2), where the roof is inclined by an angle comprised between 2° and 15°;
• a position of transition (P3), which is a position of transition between the tilted position and an intermediate position;
• an intermediate position (P4), where the opening (A) is partially uncovered, enabling direct view between the two environments;
• a position final or open (P5), wherein the roof frees the opening (A) leaving the entire opening (A) uncovered.

8. Sunroof according to claim 1, wherein said at least one covering portion (2) is kept in the different positions (P) via at least one retention mechanism, which is activated and deactivated by co-operation of the actuator (3) with the cam mechanism and the lever mechanism.

9. Sunroof according to claim 8, wherein the retention mechanism comprises at least one retention device (41), which blocks at least one covering portion (2) in a predetermined position, at least one safety device (43), which keeps at least one covering portion (2) blocked in a secure way in one or more preset positions, and at least one constraint element 42, for hinging and blocking at least one covering portion (2) about at least one axis.

10. Sunroof according to claim 8, wherein each covering portion (2) comprises at least one blocking element (21) for securing the covering portion (2), via the retention mechanism, to the roof structure (1) in predetermined positions.

11. Sunroof according to claim 9, wherein at least one covering portion (2) comprises at least one engagement portion (22), in which the constraint element (42), of the retention mechanism, can fit to perform its function of constraint, hinging at least one covering portion (2).
